# EUROPÄISCHE PATENTSCHRIFT

(11) **EP 2 217 658 B1**
(45) Veröffentlichungstag und Bekanntmachung des Hinweises auf die Patenterteilung: **20.04.2011**
(21) Anmeldenummer: 08803351.9
(22) Anmeldetag: 29.08.2008
(51) Int. Cl.: C08L 33/08, C08L 33/10

(54) **FORMKÖRPER MIT MATTER UND STRUKTURIERTER OBERFLÄCHENBESCHAFFENHEIT**
MOLDED BODY HAVING MATT AND STRUCTURED SURFACE PROPERTIES
CORPS MOULÉS À SURFACE MATE ET STRUCTURÉE

(30) Priorität: 10.12.2007 DE 102007059632
(43) Veröffentlichungstag der Anmeldung: 18.08.2010
(73) Patentinhaber: Evonik Röhm GmbH, 64293 Darmstadt (DE)
(72) Erfinder: SCHULTES, Klaus, 65193 Wiesbaden (DE); SCHWARZ-BARAC, Sabine, 64560 Riedstadt (DE); ALBRECHT, Klaus, 55129 Mainz (DE); GOLCHERT, Ursula, 64807 Dieburg (DE); NAU, Stefan, 64572 Buettelborn (DE); THOMAS, Sabrina, 68647 Biblis (DE); SCHNABEL, Michael, 64584 Biebesheim (DE)
(86) Internationale Anmeldenummer: PCT/EP2008/061352
(87) Internationale Veröffentlichungsnummer: WO 2009/074358

(56) Entgegenhaltungen:
- EP-A- 0 422 837
- EP-A- 1 022 115
- DE-A1- 19 961 894

## Beschreibung

Die vorliegende Erfindung betrifft eine Zusammensetzung zur Herstellung von Formkörpern mit matter und strukturierter Oberflächenbeschaffenheit, die aus einer solchen Zusammensetzung erhältlichen Formkörper sowie deren Verwendung.

Für Licht- und Beleuchtungsanwendungen, Verkaufsstellen und Kosrnetikverkaufständer gibt es eine permanente Nachfrage nach neuen und innovativen Produkten, die optisch möglichst ansprechend sind und gleichzeitig möglichst kostengünstig hergestellt werden können. Wünschenswert ist insbesondere eine Kunststoffprodukt, welches die Eigenschaften und das Aussehen von sandgestrahltem Glas möglichst gut imitiert.

Die Herstellung derartiger Kunststoffe auf konventionelle Weise, z. B. durch Oberflächenbehandlung, wie Sandstrahlen und Herstellung von Oberflächenmustem, und mittels Zugabe anorganischer Füll- und Zusatzstoffe, wie Bariumsulfat, Calciumcarbonat, Titandioxid, Siliziumdioxid usw., ist für diesen Zweck nur bedingt geeignet. Zum einen ist diese Vorgehensweise äußerst aufwendig und kostenintensiv. Darüber hinaus können anorganische Füllstoffe meist nur schlecht innerhalb einer Polymermatrix gleichmäßig dispergiert werden. Zudem reduzieren sie in großem Maße die Lichtdurchlässigkeit des Polymers und führen nicht zu der gewünschten Oberflächentextur oder -beschaffenheit. Außerdem verschlechtern derartige Füllstoffe die physikalischen Eigenschaften des Polymers.

### Stand der Technik

Das Patent US 4,876,311 schlägt die Verwendung einer opaken synthetischen Harzzusammensetzung vor, die 1 - 30 Gew.% vernetzte Perlen enthält. Die Perlen sollen dabei aus einem Polymer aus
(i) 9,9 - 59,9 Gew.-% mindestens eines radikalisch polymerisierbaren Monomers, das einen aromatischen Rest enthält, oder eines nichtaromatischen Monomers, das ein Halogen enthält,
(ii) 90 - 40 Gew.-% vinylischer Monomere, die mit diesen copolymerisierbar sind, aber von ihnen verschieden sind,
(iii) 0,1 - 20 Gew.-% mindestens eines vernetzenden Monomers und
(iv) 0 -10 Gew.-% eines stark polaren Monomers bestehen.

Weiterhin soll der Brechungsindex des Polymers größer als der der Polymermatrix sein und die mittlere Teilchengröße der Perlen im Bereich von 20 - 50 µm liegen.

Die Harzzusammensetzung wird zu den gewünschten Formkörpern extrudiert.

Das Patent EP 1 022 115 beschreibt extrudierte Gegenstände, die eine matte und strukturierte Oberfläche aufweisen. Um diesen Effekt zu erreichen, werden lichtstreuende Perlen mit einem Brechungsindexversatz zur Matrix von > 0,02 eingesetzt. Das Gewichtsmittel der Teilchengröße der Perlen soll im Bereich von 25 - 55 µm liegen und die Teilchen sollen eine Teilchengrößenverteilung im Bereich von 10 -110 µm aufweisen. Der besondere Oberflächeneffekt kommt angeblich erst durch den Einsatz von Perlen mit exakt dieser Teilchengrößenverteilung zustande.

### Aufgabe

Der vorliegenden Erfindung liegt die Aufgabe zugrunde, Möglichkeiten zur Herstellung von Formkörpern mit matter und strukturierter Oberflächenbeschaffenheit aufzuzeigen, die ein verbessertes Eigenschaftsprofil aufweisen. So sollte eine möglichst hohe Homogenität erreicht werden. Inhomogenitäten und optische Defekte, wie z. B. Stippen, sollten nach Möglichkeit vermieden werden. Weiterhin wurden möglichst gute mechanische Eigenschaften angestrebt. Die Rauhigkeit der Formkörper sollte nach Möglichkeit verbessert werden. Zusätzlich wurde eine wesentliche Verbesserung der Witterungsbeständigkeit gewünscht. Weiterhin wurde eine Lösung angestrebt, die sich auf vergleichbar einfache Art und Weise großtechnisch und kostengünstig realisieren lässt.

### Lösung

Diese sowie weitere nicht konkret genannte Aufgaben, die sich aus den einleitend diskutierten Zusammenhängen jedoch in nahe liegender Weise ergeben, werden durch eine Zusammensetzung mit allen Eigenschaften des vorliegenden Patentanspruchs 1 gelöst. Die auf Anspruch 1 rückbezogenen Unteransprüche beschreiben besonders zweckmäßige Abwandlungen der Zusammensetzung. Weiterhin werden die aus der Zusammensetzung erhältlichen Formkörper sowie besonders vorteilhafte Anwendungsgebiete der Formkörper unter Schutz gestellt.

Dadurch, dass man eine Zusammensetzung zur Herstellung von Formkörpern mit matter und strukturierter Oberflächenbeschaffenheit zur Verfügung stellt, die eine Polymermatrix und vernetzte Polymerpartikel umfasst, wobei die Zusammensetzung
(i) erste vernetzte Polymerpartikel mit einem Gewichtsmittel der Teilchengröße im Bereich von 30 µm - 1500 µm und
(ii) zweite vernetzte Polymerpartikel mit einem Gewichtsmittel der Teilchengröße kleiner 30 µm enthält,
   wobei die Differenz des Brechungsindex der ersten Polymerpartikel minus dem Brechungsindex der Polymermatrix, jeweils gemessen bei 25°C, im Betrag kleiner 0,015 ist und wobei die Differenz des Brechungsindex der zweiten Polymerpartikel minus dem Brechungsindex der Polymermatrix, jeweils gemessen bei 25°C, im Betrag größer gleich 0,015 ist, gelingt es auf nicht ohne weiteres vorhersehbare Weise, eine Zusammensetzung für die Herstellung von Formkörpern mit matter und strukturierter Oberflächenbeschaffenheit zugänglich zu machen, die ein verbessertes Eigenschaftsprofil aufweisen. So zeichnen sich die erfindungsgemäß erhältlichen Formkörper durch eine sehr hohe Homogenität, insbesondere bezüglich der mechanischen und der optischen Eigenschaften aus. Inhomogenitäten und optische Defekte, wie z. B. Stippen, werden nicht beobachtet. Weiterhin weisen die erfindungsgemäß erhältlichen Formkörper sehr gute mechanische Eigenschaften, eine sehr hohe Rauhigkeit und eine signifikant verbesserte Witterungsbeständigkeit auf. Die Herstellung der erfindungsgemäßen Formkörper mit matter und strukturierter Oberflächenbeschaffenheit kann auf vergleichbar einfache Art und Weise durch Umformen der erfindungsgemäßen Zusammensetzung erfolgen.

Die erfindungsgemäße Zusammensetzung enthält eine Polymermatrix als kontinuierliche Phase. Als Matrixpolymere eignen sich alle für diesen Zweck bekannten thermoplastisch verarbeitbaren Polymere. Hierzu gehören unter anderem Polyalkyl(meth)acrylate, wie beispielsweise Polymethylmethacrylat (PMMA), Polyacrylnitrile, Polystyrole, Polyether, Polyester, Polycarbonate, Polyvinylchloride. Hierbei sind Polyalkyl(meth)acrylate bevorzugt. Diese Polymere können einzeln sowie als Mischung eingesetzt werden. Des Weiteren können diese Polymere auch in Form von Copolymeren vorliegen.

Im Rahmen der vorliegenden Erfindung werden Homo- und Copolymere von C₁-C₁₈-Alkyl(meth)acrylaten, zweckmäßigerweise von C₁-C₁₀-Alkyl(meth)acrylaten, insbesondere von C₁-C₄-Alkyl(meth)acrylatpolymere, die ggf. noch davon verschiedene Monomereinheiten enthalten können, besonders bevorzugt.

Die Schreibweise (Meth)acrylat bedeutet hier sowohl Methacrylat, wie z. B. Methylmethacrylat, Ethylmethacrylat usw., als auch Acrylat, wie z. B. Methylacrylat, Ethylacrylat usw., sowie Mischungen aus beiden Monomeren.

Die Verwendung von Copolymeren, die 70 Gew.-% bis 99 Gew.-%, insbesondere 70 Gew.-% bis 90 Gew.-%, C₁-C₁₀-Alkyl(meth)acrylate enthalten hat sich ganz besonders bewährt. Bevorzugte C₁-C₁₀-Alkylmethacrylate umfassen Methylmethacrylat, Ethylmethacrylat, Propylmethacrylat, Isopropylmethacrylat, n-Butylmethacrylat, Isobutylmethacrylat, tert.-Butylmethacrylat, Pentylmethacrylat, Hexylmethacrylat, Heptylmethacrylat, Oktylmethacrylat, Isooctylmethacrylat und Ethylhexylmethacrylat, Nonylmethacrylat, Decylmethcrylat sowie Cycloalkylmethacrylate, wie beispielsweise Cyclohexylmethacrylat, Isobomylmethacrylat oder Ethylcyclohexylmethacrylat. Bevorzugte C₁-C₁₀-Alkylacrylate umfassen Methylacrylat, Ethylacrylat, Propylacrylat, Isopropylacrylat, n-Butylacrylat, Isobutylacrylat, tert.-Butylacrylat, Pentylacrylat, Hexylacrylat, Heptylacrylat, Octylacrylat, Isooctylacrylat, Nonylacrylat, Decylacrylat und Ethylhexylacrylat sowie Cycloalkylacrylate, wie beispielsweise Cyclohexylacrylat, Isobornylacrylat oder Ethylcyclohexylacrylat.

Ganz besonders bevorzugte Copolymere umfassen 80 Gew.-% bis 99 Gew.-% MMA-Einheiten und 1 Gew.-% bis 20 Gew.-%, vorzugsweise 1 Gew.-% bis 5 Gew.-%, C₁-C₁₀-Alkylacrylat-Einheiten, insbesondere Methylacrylat- und/oder Ethylacrylat-Einheiten. Die Verwendung des bei der Firma Evonik Röhm GmbH erhältlichen Polymethylmethacrylats PLEXIGLAS^{®} 7N hat sich in diesem Zusammenhang ganz besonders bewährt.

Das Matrixpolymer kann durch an sich bekannte Polymerisationsverfahren hergestellt werden, wobei radikalische Polymerisationsverfahren, insbesondere Substanz-, Lösungs-, Suspensions- und Emulsionspolyrnerisationsverfahren besonders bevorzugt werden. Für diese Zwecke besonders geeignete Initiatoren umfassen insbesondere Azoverbindungen, wie 2,2'-Azobis-(isobutyronitril) oder 2,2'-Azobis(2,4-dimethylvaleronitril), Redox-Systeme, wie beispielsweise die Kombination von tertiären Aminen mit Peroxiden oder Natriumdisulfit und Persulfate von Kalium, Natrium oder Ammonium oder bevorzugt Peroxide (vgl. hierzu beispielsweise H. Rauch-Puntigam, Th. Völker, "Acryl- und Methacrylverbindungen", Springer, Heidelberg, 1967 oder Kirk-Othmer, Encyclopedia of Chemical Technology, Vol. 1, Seiten 386ff, J. Wiley, New York, 1978). Beispiele geeigneter Peroxid-Polymerisationsinitiatoren sind Dilauroylperoxid, tert.-Butylperoctoat, tert.-Butylperisononanoat, Dicyclohexylperoxidicarbonat, Dibenzoylperoxid oder 2,2-Bis-(tert.-butylperoxy)-butan. Man kann auch bevorzugt die Polymerisation mit einem Gemisch verschiedener Polymerisationsinitiatoren unterschiedlicher Halbwertzeit durchführen, beispielsweise Dilauroylperoxid und 2,2-Bis-(tert.-butylperoxy)-butan, um den Radikalstrom im Verlauf der Polymerisation sowie bei verschiedenen Polymerisationstemperaturen konstant zu halten. Die eingesetzten Mengen an Polymerisationsinitiator liegen im Allgemeinen bei 0,01 Gew.-% bis 2 Gew.-% bezogen auf das Monomerengemisch.

Die Polymerisation kann sowohl kontinuierlich als auch chargenweise durchgeführt werden. Nach der Polymerisation wird das Polymer über herkömmliche Isolier- und Trennschritte, wie z. B. Filtration, Koagulation und Sprühtrocknung, gewonnen und üblicherweise in teilchenförmiger Form eingesetzt.

Die Einstellung der Kettenlängen der Polymerisate oder Copolymerisate kann durch Polymerisation des Monomers oder Monomerengemisches in Gegenwart von Molekulargewichtsreglern erfolgen, wie insbesondere von den dafür bekannten Mercaptanen, wie beispielsweise n-Butylmercaptan, n-Dodecylmercaptan, 2-Mercaptoethanol, Methyl-3-mercaptopropionat oder 2-Ethylhexylthioglycolat, Pentaerythrittetrathioglycolat; wobei die Molekulargewichtsregler im Allgemeinen in Mengen von 0,05 Gew.-% bis 5 Gew.-% bezogen auf das Monomer oder Monomerengemisch, bevorzugt in Mengen von 0,1 Gew.-% bis 2 Gew.-% und besonders bevorzugt in Mengen von 0,2 Gew.-% bis 1 Gew.-% bezogen auf das Monomer oder Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1, Seite 66, Georg Thieme, Heidelberg, 1961 oder Kirk-Othmer, Encyclopedia of Chemical Technology, Vol. 1, Seiten 296ff, J. Wiley, New York, 1978). Bevorzugt wird als Molekulargewichtsregler n-Dodecylmercaptan eingesetzt.

Die Matrix kann gleichermaßen weitere, dem Fachmann wohlbekannte Additive enthalten. Bevorzugt werden schlagzähmodifizierende Substanzen, externe Schmiermittel, Antioxidantien, Flammschutzmittel, UV-Stabilisatoren, Fließhilfen, Metalladditive zur Abschirmung elektromagnetischer Strahlung, Antistatika, Entformungsmittel, Farbstoffe, Pigmente, Haftvermittler, Verwitterungsschutzmittel, Weichmacher, Füllstoffe und dergleichen.

Die Herstellung der schlagzähmodifizierenden Substanzen erfolgt vorzugsweise durch Emulsionspolymerisationsverfahren. Auf diese Weise wird ein stabiler Latex mit einem arithmetischen Gewichtsmittel der Teilchengröße im Bereich von 0,05 µm bis 5 µm erhalten, der üblicherweise sprühgetrocknet oder koaguliert/trockengewaschen wird, um das Polymer zu isolieren.

Für diese Zwecke geeignete Emulgatoren sind dem Fachmann bekannt und umfassen insbesondere übliche Seifen, Alkylbenzolsulfonate, wie Natriumdodecylbenzolsulfonate, Alkylphenoxypolyethylensulfonate, Natriumlaurylsulfate, Salze langkettiger Amine, Salze langkettiger Carbon- und Sulfonsäuren usw.. Besonders bevorzugte Emulgatoren umfassen Kohlenwasserstoffgruppen mit 8 bis 22 Kohlenstoffatomen, die mit hochpolaren, solubilisierenden Gruppen verbunden sind, wie Alkalimetall- und Ammoniumcarboxylatgruppen, Sulfathalbestergruppen, Sulfonatgruppen, Phosphatteilestergruppen usw..

Die Einarbeitung der schlagzähmodifizierenden Substanzen kann durch nachträgliches Abmischen erfolgen. Es sich jedoch besonders bewährt, die schlagzähmodifizierenden Substanzen schon vor oder bei der Herstellung des Matrixpolymers zuzugeben, wie z. B. durch Dispergieren der schlagzähmodifizierenden Substanzen in einer Monomermischung, die zur Herstellung des Matrixpolymers verwendet wird, oder in einer Monomer/Polymer-Sirupmischung, welche gemeinsam das gewünschte Matrixpolymer ergibt. Gleichermaßen können die schlagzähmodifizierenden Substanzen in eine Gießmischung in Form einer Emulsion, Suspension oder Dispersion in Wasser oder in einen organischen Träger gegeben werden. Das Wasser oder der organische Träger kann dann vor oder nach dem Gießen in die endgültige Polymerform entfernt werden. Die schlagzähmodifizierenden Substanzen können auch mit dem Polymer mittels Strangpressmischen compoundiert werden. Für weitere Details bezüglich der Zugabe von schlagzähmodifizierenden Substanzen zu Matrixpolymeren wird auf das US-Patent 3,793,402 verwiesen.

Ein besonders bevorzugtes schlagzähmodifiziertes Matrixpolymer ist Polymethylmethacrylat, das kommerziell von der Firma Evonik Röhm GmbH unter dem Handelsnamen Plexiglas^{®} zk6BR erhältlich ist.

Die Polymermatrix weist vorzugsweise einen Lichtransmissionsgrad T_{D65} nach DIN 5033/7 im Bereich von 40 % bis 93 %, vorzugsweise größer 75 %, insbesondere größer 85 %, auf.

Der Gehalt der Polymermatrix, bezogen auf das Gesamtgewicht der Zusammensetzung, beträgt günstigerweise 20,0 Gew.-% bis 95,0 Gew.-%, bevorzugt 30 Gew.-% bis 90 Gew.-%, zweckmäßigerweise 50 Gew.-% bis 89 Gew.-%, insbesondere 70 Gew.-% bis 88 Gew.-%.

Im Rahmen der vorliegenden Erfindung enthält die Zusammensetzung neben der Polymermatrix noch
(i) erste Polymerpartikel mit einem Gewichtsmittel der Teilchengröße im Bereich von 30 µm bis 1500 µm, vorzugsweise im Bereich von größer 35 µm bis 500 µm, insbesondere im Bereich von 40 µm bis 150 µm, und
(ii) zweite Polymerpartikel mit einem Gewichtsmittel der Teilchengröße kleiner 30 µm, vorzugsweise im Bereich von 1 µm bis kleiner 30 µm, insbesondere im Bereich von 5 µm bis 25 µm.

Diese Polymerpartikel sind vorzugsweise möglichst homogen in der Polymermatrix dispergiert.

Die angegebenen Werte zur Teilchengröße beziehen sich jeweils auf das Volumenmittel der Teilchengrößenverteilung. Diese Teilchengrößenverteilung kann beispielsweise durch einen Mastersizer 2000 der Fa. Malvern Instruments Ltd. ermittelt werden, wobei die exakte Meßmethode zur Bestimmung der Teilchengröße im Benutzerhandbuch enthalten ist. Hierbei gilt die Norm ISO 13320-1, die Berechnung erfolgt nach der Fraunhofermodell- und Mie-Theorie. Als Parameter werden der Brechungsindex n²⁰ von 1,489 (PMMA) und der ABS_{Koeffizient} von 0 angesetzt. Diese Methode ist bevorzugt. Darüber hinaus kann die Teilchengröße durch Messen und Auszählen der Teilchen auf entsprechenden Rasterelektronenmikroskop-Aufnahmen ermittelt werden.

Zweckmäßigerweise weisen die ersten Polymerpartikel eine enge Größenverteilung auf. Besonders bevorzugt ist die Standardabweichung der gemittelten Partikeldurchmesser von höchstens 50 µm, ganz besonders bevorzugt von höchstens 40 µm und insbesondere von höchstens 35 µm. Die Standardabweichung der gemittelten Partikeldurchmesser der zweiten Partikel ist vorzugsweise höchstens 30 µm, zweckmäßigerweise höchstens 25 µm, insbesondere höchstens 20 µm, noch mehr bevorzugt höchstens 15 µm und äußerst zweckmäßig höchstens 12,5 µm.

In besonders bevorzugten Ausgestaltungen der vorliegenden Erfindung werden erste und zweite Polymerpartikel eingesetzt, die nicht oder nur in geringem Maß koagulieren, aggregieren oder zusammenlagern. Unter der Aussage "nur in geringem Maß koagulieren" wird im Zusammenhang mit der Erfindung verstanden, dass bei Einarbeitung der Partikel in eine polymere Matrix und anschließender Verarbeitung durch Extrusion, an der Oberfläche des so hergestellten Formkörpers keinen Inhomogenitäten oder Stippen (punktartige vereinzelte Erhöhungen) auftreten.

Der Brechungsindex der Polymerpartikel kann für das Erreichen der erfindungsgemäßen Ziele von ganz besonderem Interesse sein. Die Differenz des Brechungsindex der ersten Polymerpartikel minus dem Brechungsindex der Polymermatrix soll vorteilhaft im Betrag kleiner 0,015, vorzugsweise kleiner 0,013, zweckmäßigerweise kleiner 0,01, insbesondere kleiner 0,007 betragen, noch mehr bevorzugt 0,005 oder 0,0035 oder 0,002. Die Differenz des Brechungsindex der zweiten Polymerpartikel minus dem Brechungsindex der Polymermatrix soll nach Möglichkeit im Betrag größer gleich 0,015, vorzugsweise größer 0,016, zweckmäßigerweise größer 0,018, insbesondere größer 0,02, ganz besonders bevorzugt größer 0,025, noch mehr bevorzugt größer 0,03, größer 0,033 oder größer 0,035 sein.

Dabei werden die Werte für den Brechungsindex gemäß ISO 489 bei λ = 589,3 nm bestimmt. Im Übrigen beziehen sich die Angaben auf 25°C. Dies gilt auch für alle anderen Messgrößen, auf die hier Bezug genommen wird, sofern nicht eine andere Referenztemperatur ausdrücklich spezifiziert wird.

Sowohl die ersten als auch die zweiten Polymerpartikel sind im Rahmen der vorliegenden Erfindung vernetzt. "Vernetzt" heißt in diesem Zusammenhang, dass die Partikel nur in geringen Mengen in einem starken organischen Lösungsmittel, wie Tetrahydrofuran (THF) gelöst werden können. Hierbei bedeutet "geringe Menge", dass der polymerlösliche Anteil maximal 7 Gew.-% beträgt, bezogen auf das Gesamtgewicht der in der Meßmethode eingesetzten Partikel. Der Polymerlösliche Anteil wird wie folgt bestimmt:
Die Polymerpartikel werden in THF gelöst und 3 Stunden bei 21000 U/min. zentrifugiert. Von dem Überstand werden jeweils 15 ml abgezogen und wieder mit ca. 15 ml THF aufgefüllt. Dies wird 3 mal wiederholt. Der abgezogene Überstand wird durch einen 0,45µm Membranfilter filtriert, anschließend auf 60 mL reduziert und erneut 3 Stunden zentrifugiert. Nach der Zentrifugation wird der Überstand eingedampft und mittels NMR und GC-MS analysiert.

Die Vernetzung der Polymerpartikel wird vorzugsweise durch Copolymerisation mit geeigneten vernetzenden Monomeren erreicht, die üblicherweise mehr als eine, vorzugsweise radikalisch, polymerisierbare Einheit im Molekül besitzen. Bevorzugt werden solche mit mindestens zwei vinylischen Gruppen, insbesondere Divinylbenzol, ferner Acryl- und Methacrylsäureester und -amide von Polyolen, insbesondere Glykoldi(meth)acrylat, 1,3- und 1,4-Butandiol(meth)acrylat, Trimethylolpropantri(meth)- acrylat, Tetraäthylenglykoldi(meth)acrylat, weiter Monomere, die Vinyliden-, die (verkappte) Amidmethylol-, Carbamidrnethyloläther-, Azlacton- und Epoxygruppen enthalten, insbesondere N-Methylol(meth)acrylamid, Methylenbisacrylamid und methacrylamid, Glycidyl(meth)acrylat, sowie auch vernetzende Monomere mit ungesättigten Gruppen abgestufter Reaktivität im Molekül, insbesondere die Vinyl, Allyl- und Crotylester der Acryl- und/oder Methacrylsäure. Besonders bevorzugt werden Allylmethacrylat, Divinylbenzol und/oder Ethylenglykoldimethacrylat eingesetzt. Weitere Details zu derartigen Monomeren können H. Rauch-Puntigam, Th. Völker, Acryl- und Methacrylverbindungen, Springer-Verlag Berlin, 1967 entnommen werden.

Der Anteil der vernetzenden Monomeren bezogen auf das Gesamtgewicht der jeweiligen Monomermischung liegt günstigerweise im Bereich von 0,1 Gew.-% bis 5,0 Gew.-%, insbesondere im Bereich von 0,5 Gew.-% bis 1,5 Gew.-%.

Die Vernetzung soll u. a. bewirken, dass die Partikel bei der Verarbeitung bei erhöhter Temperatur (bis ca. 300°C) nicht aufschmelzen.

Bezüglich ihrer Zusammensetzung unterliegen die vernetzten Partikel keinen besonderen Beschränkungen.

Als erste Polymerpartikel werden Polyalkyl(meth)acrylate besonders bevorzugt. Diese Polymere können einzeln sowie als Mischung eingesetzt werden. Des Weiteren können diese Polymere auch in Form von Copolymeren vorliegen.

Im Rahmen der vorliegenden Erfindung werden Homo- und Copolymere von C₁-C₁₈-Alkyl(meth)acrylaten, zweckmäßigerweise von C₁-C₁₀-Alkyl(meth)acrylaten, insbesondere von C₁-C₄-Alkyl(meth)acrylatpolymere, die ggf. noch davon verschiedene Monomereinheiten enthalten können, besonders bevorzugt.

Die Verwendung von Copolymeren, die 70 Gew.-% bis 99 Gew.-%, insbesondere 70 Gew.-% bis 90 Gew.-%, C₁-C₁₀-Alkyl(meth)acrylate enthalten hat sich ganz besonders bewährt. Bevorzugte C₁-C₁₀-Alkylmethacrylate umfassen Methylmethacrylat, Ethylmethacrylat, Propylmethacrylat, Isopropylmethacrylat, n-Butylmethacrylat, Isobutylmethacrylat, tert.-Butylmethacrylat, Pentylmethacrylat, Hexylmethacrylat, Heptylmethacrylat, Oktylmethacrylat, Isooctylmethacrylat und Ethylhexylmethacrylat, Nonylmethacrylat, Decylmethcrylat sowie Cycloalkylmethacrylate, wie beispielsweise Cyclohexylmethacrylat, Isobomylmethacrylat oder Ethylcyclohexlmethacrylat. Bevorzugte C₁-C₁₀-Alkylacrylate umfassen Methylacrylat, Ethylacrylat, Propylacrylat, Isopropylacrylat, n-Butylacrylat, Isobutylacrylat, tert.-Butylacrylat, Pentylacrylat, Hexylacrylat, Heptylacrylat, Octylacrylat, Isooctylacrylat, Nonylacrylat, Decylacrylat und Ethylhexylacrylat sowie Cycloalkylacrylate, wie beispielsweise Cyclohexylacrylat, Isobornylacrylat oder Ethycyclohexlacrylat.

Ganz besonders bevorzugte Copolymere umfassen 80 Gew.-% bis 99 Gew.-% MMA-Einheiten und 1 Gew.-% bis 20 Gew.-%, vorzugsweise 1 Gew.-% bis 5 Gew.-%, C₁-C₁₀-Alkylacrylat-Einheiten, insbesondere Methylacrylat- und/oder Ethylacrylat-Einheiten.

Besonders bevorzugt ist weiterhin die Verwendung von zweiten Polymerpartikeln, die mindestens ein radikalisch polymerisierbares Monomer enthalten, das mindestens einen aromatischen Rest umfasst. Vorzugsweise handelt es sich hierbei um Styrol und seine methylsubstituierten Derivate, wie das alpha-Methyl- und das p-Methylstyrol, das p-Ethylstyrol, sowie halogenierte Derivate des Styrols, wie das p-Chlorstyrol. Weiter werden als Monomer A der Formel (I) Phenylacrylat und -methacrylat, Xylylenmethacrylat und -acrylat, insbesondere die m-Form, 4-Methylphenylacrylat und -methacrylat, 2-Phenylethylacrylat und -methacrylat, 3-Phenyl-1-propylmethacrylat und -acrylat, 2-Phenyl-oxyethylacrylat und -methacrylat sowie Benzylmethacrylat bevorzugt. Der Anteil der aromatischen Monomere ist vorzugsweise größer 50 Gew.-%, bezogen auf das Gesamtgewicht der ersten Polymerpartikel.

Eine ausführliche Beschreibung zur Herstellung solcher Partikel ist beispielsweise in EP1219641, Beispiel 2, zu finden. Auf diese Druckschrift wird hiermit zum Zwecke der Offenbarung Bezug genommen.

Weiterhin besonders zweckmäßig als zweite Polymerpartikel werden solche eingesetzt, die unter dem Namen "Techpolymer® SBX8" im Handel vom Hersteller Sekisui Chemical Co. Ltd., Japan erhältlich sind. Hierbei handelt es sich um Polymerpartikel die aus vernetztem Polystyrol bestehen und ein Volumenmittel der Teilchengröße von 6 bis 10 µm haben.

Die Zusammensetzung der Polymerpartikel kann mittels eines Pyrolyse-GC/MS-Spektrometers bestimmt werden, wobei das Polymermaterial bei einer erhöhten Temperatur pyrolisiert wird und die zerfallenen Bestandteile zur quantitativen Bestimmung weiter analysiert werden.

Für die Herstellung der Polymerpartikel haben sich Suspensionspolymerisationsverfahren (Perlpolymerisationen) ganz besonders bewährt haben. Bei diesem Verfahren werden die Monomere als disperse Phase durch Einwirkung mechanischer Kräfte (Rührung) in einem Nichtlösungsmittel (kontinuierliche Phase) verteilt und in dieser Form polymerisiert. Das gebildete Polymerisat ist überwiegend im Monomeren löslich. Unter dem Einfluss der Grenzflächenspannung bildet das Monomere kugelförmige Tropfen. Um die Tropfenform während der Polymerisation zu erhalten und das Zusammenlaufen von Tropfen zu verhindern, setzt man dem Polymerisationsansatz so genannte "Dispergatoren" oder Verteiler (Schutzkolloide) zu, vorzugsweise Substanzen, die sich nach beendeter Polymerisation vollständig von dem perlförmig anfallenden Polymerisat abtrennen lassen.

Der "Verteiler" bewirkt, dass die einmal gebildeten Monomertröpfchen soweit stabilisiert werden, dass eine Vereinigung von Tropfen praktisch unterbleibt.

Als kontinuierliche Phase verwendet man in der Regel Wasser. Als zur Polymerisation geeignete Monomere kommen daher primär schwerlösliche bis wasserunlösliche, radikalisch polymerisierbare Monomere in Frage. (Vgl. Houben-Weyl, 4. Auflage, Bd. XIV/1 "Makromolekulare Stoffe", S. 406-433, G. Thieme-Verlag 1961.)

Als Verteiler werden vorzugsweise (wasserunlösliche) Salze anorganischer Säuren, wie Bariumsulfat oder Bariumcarbonat oder hochmolekulare Naturstoffe oder synthetische Polymere eingesetzt. Zu der Gruppe der hochmolekularen Verteiler gehören wasserlösliche Kolloide, wie Polyvinylalkohol, teilweise verseiftes Polyvinylacetat, Methylcellulose, Stärke, Gelatine, Pektin, die Alkalisalze der Polyacrylsäure oder die Alkalisalze von Styrol- oder Vinylacetat-Maleinsäureanhydrid-copolymeren u. a. (Vgl. Houben-Weyl, loc.cit. S. 411-430.) Das Verhältnis der wässrigen zur Monomerenphase liegt vorzugsweise bei 2 : 1 bis 4 : 1.

Bei der Perlpolymerisation werden bekanntlich Starter eingesetzt, die in erster Näherung im Monomeren löslich, aber in Wasser unlöslich sind. Meistens liegt die angewandte Startermenge bei 0,1 Gew.-% bis 1 Gew.-%, bevorzugt um 0,5 Gew.-%, bezogen auf die Monomeren. Als Starter kommen bevorzugt die üblichen im Monomeren löslichen organischen Peroxide oder entsprechende Azoverbindungen zur Anwendung, wie z. B. Dibenzoylperoxid, Lauroylperoxid, Azoisobutyronitril. Radikalbildner mit höheren Zerfallstemperaturen können zusätzlich verwendet werden, wenn gegen Reaktionsende zur möglichst vollständigen Polymerisation die Temperatur gesteigert wird. Die Perlgrösse lässt sich in dem beanspruchten Rahmen einstellen.

Ferner können die üblicherweise verwendeten Gleitmittel wie Fettalkohole, Stearinsäureester, Palmitinsäureester oder natürliche Wachse - vorzugsweise vor der Polymerisation - zugesetzt werden.

Die praktische Durchführung der Polymerisation kann so erfolgen, dass das Wasser, die Monomere, Starter, Dispergiermittel und gegebenenfalls Gleitmittel zusammen vorgelegt und dann erhitzt werden, beispielsweise auf ca. 90°C. Gegebenenfalls wird die überschüssige Polymerisationswärme, besonders ab 95°C, durch äußere Kühlung abgeführt. Temperaturen oberhalb 115°C sollten nach Möglichkeit vermieden werden. Die Dauer der Polymerisation liegt üblicherweise im Bereich von 1 bis 5 Stunden. Die Viskosität des Polymerisationsansatzes (gemessen mit einem Brookfield-Viskosimeter bei der Polymerisationstemperatur) liegt im Allgemeinen im Bereich zwischen 800 mPas und 8.000 mPas.

Die zum Teil reaktiven Gleitmittel werden vorzugsweise erst ab etwa 20% Umsatz zugesetzt. Auch der Zusatz von Reglern kann im Verlauf der Polymerisation erfolgen.

Nach Reaktionsende werden die Perlen im Allgemeinen durch Filtration oder Zentrifugation abgetrennt. Anhaftende Zusätze können auf geeignete Weise, z. B. durch Waschen mit verdünnter Säure und Wasser entfernt werden. Die Perlen werden häufig unter Erwärmen, vorzugsweise mit Luftumwälzung, getrocknet, z. B. in Hordenschränken.

Es liegt im Rahmen der vorliegenden Erfindung, die vernetzten Partikel während der Suspensionsverfahren zu färben oder einzufärben. Der Vorteil der Verwendung von gefärbten oder eingefärbten Partikel gegenüber einem eingefärbten Matrixmaterial sind Flexibilität in Bezug auf Herstellung, Verringerung der Kosten, bessere Farbverteilung, verringerter Oberflächenglanz, tiefe und natürliche Farbverteilung sowie ein verminderter Reinigungsaufwand bei der Herstellung von unterschiedlichen Produkten.

Das Einbringen der vernetzten Polymerpartikel in die erfindungsgemäße Zusammensetzung kann durch Mischen der Komponenten erfolgen, wobei die Bestandteile vorzugsweise homogen in der Zusammensetzung verteilt werden.

Der Gehalt der ersten Polymerpartikel, bezogen auf das Gesamtgewicht der Zusammensetzung, beträgt günstigerweise 0,1 Gew.-% bis 20,0 Gew.-%, bevorzugt 1,0 Gew.-% bis 18,0 Gew.-%, zweckmäßigerweise 3,0 Gew.-% bis 15,0 Gew.-%, insbesondere 4,0 Gew.-% bis 12,0 Gew.-%.

Der Gehalt der zweiten Polymerpartikel, bezogen auf das Gesamtgewicht der Zusammensetzung, beträgt günstigerweise 0,1 Gew.-% bis 20,0 Gew.-%, bevorzugt 0,2 Gew.-% bis 18,0 Gew.-%, zweckmäßigerweise 0,3 Gew.-% bis 14,0 Gew.-%, insbesondere 0,4 Gew.-% bis 10,0 Gew.-%.

Die Zusammensetzung kann wie herkömmliche Thermoplaste zu verschiedenen Endprodukten weiterverarbeitet, insbesondere umgeformt, werden. Bevorzugte Umformverfahren umfassen die Profilextrusion, die Platten- und Folienextrusion, Spritzgießen und Spritzpressen. Das aus der Platten-, Folien oder Profilextrusion resultierende Produkt weist eine strukturierte Oberfläche und ein mattes Aussehen auf, ohne spezielle gemusterte Rollen, Walzen, Polier- oder Schleifvorrichtungen zu benötigen. Das Produkt, welches durch Spritzgießen erhalten wird, besitzt ein mattes Aussehen.

Der Ausdruck "strukturierte Oberfläche", wie er hier verwendet wird, beschreibt eine Oberfläche mit folgender Rauhigkeit:
o Der Mittenrauhwert Ra beträgt mindestens 1,0 µm, vorzugsweise mindestens 2,7 µm, insbesondere mindestens 4,55 µm.
o Die gemittelte Rauhtiefe Rz beträgt mindestens 10 µm, vorzugsweise mindestens 22 µm, insbesondere mindestens 31 µm.
o Die Rauhtiefe Rt beträgt mindestens 20 µm, vorzugsweise mindestens 28 µm, insbesondere mindestens 38 µm.

Dabei wird die Oberflächenrauhigkeit gemäß DIN EN ISO 4287 und DIN EN ISO 4288 ermittelt.

Einer der Vorteile der vorliegenden Erfindung besteht darin, dass die Gesamtweißlichtransmission (Total White Light Transmission (TWLT)) viel größer ist als bei ähnlichen kommerziellen Produkten, die mit anorganischen Füllstoffen, wie Bariumsulfat oder Farbkonzentrat, zur Erreichung eines matten Aussehens versehen sind. Z. B. weist bariumsulfatpigmentiertes PMMA einen TWLT-Wert von 47 % auf, während erfindungsgemäß TWLT-Werte von über 80 % erreicht werden können. Der TWLT-Wert wird nach ASTM: E1331 und E1164" vorzugsweise unter Verwendung eines Hunterlab-Coloimeter-D25-Modell, gemessen.

Das mattierte Aussehen kann mittels einer Opazitäts- oder Lichtundurchlässigkeitsmessung (Trübungsmessung) bestimmt werden. Je höher der Opazitätswert, desto besser ist die Deckkraft oder das Unkenntlichkeitsvermögen. Um ein mattiertes Aussehen zu erreichen, sollte die Opazität mindestens 10 % betragen. Die Beladung der Polymerpartikel und der Unterscheid in den Brechungsindizes beeinflusst die Deckkraft der Probe, welche durch die Opazitätszahl ausgedrückt wird. Die Bestimmung der Opazitätswerte erfolgt vorzugsweise nach den Normen ASTM D2805-80, ASTM D589-65, TAPPI T-425 und TAPPI T-519.

Die erfindungsgemäße Zusammensetzung und die daraus erhältlichen Formkörper weisen vorzugsweise einen Lichttransmissionsgrad T_{D65} nach DIN 5033/7 von mindestens 50 %, bevorzugt mindestens 55 %, besonders bevorzugt von mindestens 70 %, insbesondere im Bereich von 80 % bis kleiner 90% auf.

Aus den erfindungsgemäße Zusammensetzungen erhältliche Formkörper weisen vorzugsweise einen Intensitätshalbwertswinkel (IHW), gemessen gemäß DIN 5036 mit einem LMT-Goniometer-Meßplatz GO-T-1500 der Fa. LMT, im Bereich von größer 5° und kleiner 60° auf. Besonders zweckmäßig sind IHW-Werte im Bereich von größer 10° und kleiner 50°. Ganz besonders zweckmäßig sind Werte im Bereich von größer 15° und kleiner 45°, noch mehr bevorzugt sind Werte für den IHW im Bereich von größer 20° und kleiner 40°.

Die Zugfestigkeit (ISO 527) von aus der Zusammensetzung erhältlichen Formkörpern beträgt vorzugsweise mindestens 20 MPa, bevorzugt mindestens 40 MPa, besonders bevorzugt mindestens 50 MPa, insbesondere mindestens 60 MPa.

Das E-Modul von aus der Zusammensetzung erhältlichen Formkörpern nach ISO 527 ist beim Einsatz von schlagzähen Polymermatrices günstiger Weise größer 1600 MPa, bevorzugt größer 1700 MPa.

Die Charpy-Schlagzähigkeit von aus der Zusammensetzung erhältlichen Formkörpern nach ISO 179 beträgt beim Einsatz von schlagzähen Polymermatrices vorzugsweise mindestens 30 kJ/m², bevorzugt mindestens 40 kJ/m², insbesondere mindestens 50 kJ/m².

Die Streckdehnung von aus der Zusammensetzung erhältlichen Formkörpern nach ISO 527 ist günstiger Weise größer 3 %, bevorzugt größer 4 %.

Die Bruchdehnung von aus der Zusammensetzung erhältlichen Formkörpern nach ISO 527 beträgt vorzugsweise mindestens 2 % und bei Einsatz von schlagzähen Polymermatrices bevorzugt mindestens 15 %, insbesondere mindestens 30 %.

Die Vicaterweichungstemperatur VET (ISO 306-B50) der erfindungsgemäßen Zusammensetzung und der daraus erhältlichen Formkörper ist beim Einsatz von nicht schlagzähen Polymermatrices vorzugsweise mindestens 95°C, bevorzugt mindestens 97°C, besonders bevorzugt mindestens 103°C, insbesondere größer 104°C.

Der Schmelzindex MVR (ISO 1133, 230°C / 3,8 kg) der erfindungsgemäßen Zusammensetzung und der daraus erhältlichen Formkörper ist beim Einsatz von schlagzähen Polymermatrices vorzugsweise mindestens 1,0 cm³/10 min, bevorzugt mindestens 1,3 cm³/10 min und bei Einsatz von nichtschlagzähen Polymermatrices besonders bevorzugt mindestens 3,0 cm³/10 min, insbesondere mindestens 4,5 cm³/10 min.

Die erfindungsgemäß erhältlichen Formkörper können insbesondere für Beleuchtungen, Zeichen oder Symbole, Verkaufsstellen und Kosmetikverkaufsständer, Behältnisse, Heim- und Bürodekorationen, Möbelanwendungen, Duschtüren und Bürotüren verwendet werden.

Die Erfindung wird durch die nachfolgenden Beispiele und Vergleichsbeispiele weiter erläutert.

Es wurden folgende Materialien eingesetzt:

### A1) Matrix 1

Als Matrix 1 wurde PLEXIGLAS zk6BR glasklar von der Fa. Evonik Röhm GmbH eingesetzt. Der Brechungsindex des Materials betrug 1,4933 (n_{D}²⁵).

### A2) Matrix 2

Als Matrix 2 wurde PLEXIGLAS 7N glasklar von der Fa. Evonik Röhm GmbH eingesetzt. Der Brechungsindex des Materials betrug 1,4939 (n_{D}²⁵).

### B1) Perlpolymerisat 1 (=Perle 1)

In einem 100 I V4A-Stahl-Reaktor, der mit einem Stickstoffeinlaß und einem Blattrührer versehen war, wurden 600 g Al₂(SO₄)3X18H₂O und 6 g Natriumparaffinsulfonat in 50 I entionisiertem Wasser bei 85°C durch Rühren mit 350 Upm gelöst. Die als Dispergiermittel verwendete Aluminiumverbindung wurde durch Zugabe von 264 g Natriumcarbonat ausgefällt.

Dann wurde eine Monomermischung aus 5,9 kg Methylmethacrylat, 4,0 kg Styrol und 0,1 kg Glykoldimethacrylat sowie 0,2 kg Dilauroylperoxid unter Stickstoff zugegeben. Die Polymerisation wurde bei 80°C für 140 Minuten und dann bei 90°C für 60 Minuten unter Rühren durchgeführt. Die Polymerisationsmischung wurde dann auf 50°C abgekühlt und mit 600 ml Schwefelsäure (50 %) behandelt, um das Dispergiermittel aufzulösen. Die Perlen wurden abfiltriert, mit entionisiertem Wasser gewaschen und für 20 Stunden bei 50°C getrocknet.

Das Volumenmittel der Teilchengröße lag bei 39,7 µm, die Teilchengrößenstandardabweichung lag bei 11 µm und der Brechungsindex der Perlen betrug 1,5248 (n_{D}²⁵)_{..}

### C1) Perlpolymerisat 2 (=Perle 2)

### Herstellung s. EP 1219641, Beispiel 2 Das Volumenmittel der Teilchengröße lag bei 20,4 µm, die Teilchengrößenstandardabweichung lag bei 8,4 µm und der Brechungsindex der Perlen betrug 1,5174 (n_{D}²⁵).

### B2) Perlpolymerisat 3 (=Perle 3)

In einem 15 V2A-Stahl-Reaktor, der mit einem Stickstoffeinlaß und einem Propellerrührer versehen war, wurden 94,5 g Al₂(SO₄)3×14H₂O in 8127,0 ml entionisiertem Wasser bei 40°C durch Rühren mit 220 Upm gelöst. Die Aluminiumverbindung wurde dann durch Zugabe von 378 g 10 %-ige Sodalösung ausgefällt. Anschließend erfolgte die Zugabe von 0,47 g Natrium-C₁₅-paraffinsulfonat und von 0,47 g Gleitmittel als 1 %-ige Lösung. Der pH-Wert der Wasserphase betrug ca. 5-5,5.

Dann wurde eine Mischung aus 1795,5 g Methylmethacrylat, 75,6 g Ethylacrylat und 18,9 g Glykoldimethacrylat sowie 37,8 g Dilauroylperoxid, 3,78 g tert. Butylper-2-ethylhaxanoat und 5,67 g tert. Dodecylmercaptan unter Stickstoff zugegeben. Die Polymerisation wurde bei 90°C für 60 Minuten unter Rühren (220 Upm) durchgeführt. Die Polymerisationsmischung wurde dann auf 40°C abgekühlt und mit 29 ml Schwefelsäure (50 %) angesäuert. Die Perlen wurden abfiltriert, mit entionisiertem Wasser gewaschen und für 20 Stunden bei 50°C getrocknet.

Das Volumenmittel der Teilchengröße lag bei 43,1 µm, die Teilchengrößenstandardabweichung lag bei 26,7 µm und der Brechungsindex der Perlen betrug n_{D}²⁵.1,4888

### C2) Perlpolymerisat 4 (=Perle 4)

Es wurde eine unter der Bezeichnung Techpolymer® SBX-8 vom Hersteller Sekisui Chemical Co. Ltd, Japan erhältliche vernetzte Polystyrolperle mit einem mittleren Teilchendurchmesser von 8 µm eingesetzt. Das Volumenmittel der Teilchengröße lag bei 8,2 µm, die Teilchengrößenstandardabweichung lag bei 3,1 µm und der Brechungsindex der Perlen betrug 1,5891 (n_{D}²⁵)..

Die Komponenten wurden miteinander gemischt und hinsichtlich ihrer Eigenschaften untersucht. Die Anteile der jeweiligen Komponenten können Tabelle 1 entnommen werden.

**Tabelle 1: Zusammensetzungen (Gewichtsanteile in Klammern)**

| | Matrix | Perle mit Δn > 0,015 | Perle mit Δn < 0,015 |
|---|---|---|---|
| B 1 | Matrix 1 (90) | Perle 2 (4) | Perle 3 (6) |
| B 2 | Matrix 1 (83) | Perle 2 (7) | Perle 3 (10) |
| B 3 | Matrix 1 (93,5) | Perle 4 (0,5) | Perle 3 (6) |
| B 4 | Matrix 1 (87) | Perle 4 (1) | Perle 3 (12) |
| B 5 | Matrix 2 (83) | Perle 2 (7) | Perle 3 (10) |
| B 6 | Matrix 2 (87) | Perle 4 (1) | Perle 3 (12) |
| VB 1 | Matrix 1 (94) | Perle 1 (6) | - |
| VB 2 | Matrix 1 (88) | Perle 1 (12) | - |
| VB 3 | Matrix 2 (94) | Perle 1 (6) | - |
| VB 4 | Matrix 2 (88) | Perle 1 (12) | - |

Die einzelnen Komponenten wurden mittels Einschneckenextruder abgemischt.

Der Volumen-Fließindex MVR (Prüfnorm ISO 1133: 1997) wurde bestimmt.

Aus den abgemischten Formmassen wurden Prüfkörper durch Spritzguss und Bändchenextrusion hergestellt. Bei der Verarbeitung wurde weder bei der Bändchenextrusion noch beim Spritzguss Metallabrieb festgestellt. Die entsprechenden Prüfkörper wurden nach folgenden Methoden geprüft:

| | |
|---|---|
| Vicat (16h/80°C): | Bestimmung der Vicat |
| | Erweichungstemperatur (Prüfnorm DIN ISO 306: August 1994) |
| SZ (Charpy 179/1eU): | Bestimmung der Charpy-Schlagzähigkeit (Prüfnorm: ISO 179: 1993) |
| E-Modul: | Bestimmung des E-Moduls (Prüfnorm: ISO 527-2) |
| Zugfestigkeit: | Bestimmung der Bruchspannung |
| | (Prüfnorm: ISO 527; 5 mm/min), der Streckspannung (Prüfnorm: ISO 527; 50 mm/min) |
| Streckdehnung | Bestimmung der Streckdehnung |
| | (Prüfnorm: ISO 527; 50 mm/min) |
| Bruchdehnung | Bestimmung der (nominellen) |
| | Bruchdehnung (Prüfnorm: ISO 527) |
| Transmission (T): | gemäß DIN 5036 |
| Intensitätshalbwertswinkel (IHW): | gemessen gemäß DIN 5036 mit einem LMT-Goniometer-Meßplatz GO-T-1500 der Fa. LMT |
| Oberflächenrauhigkeit: | Rauheitsgrößen Ra, Rz und Rt nach DIN 4768. Ra-Werte < 2 µm wurden mit einem cut off von 0,8 mm, bei Ra ≥ 2 µm mit einem cut off von 2,5 mm ermittelt. Die Rauheitsmessungen wurden mit einem Form Talysurf 50, Hersteller ist die Rank Taylor Hobson GmbH durchgeführt. |

Tabelle 2 fasst die erhaltenen Ergebnisse zusammen. Man erkennt, dass durch die erfindungsgemäße Lösung Formkörper mit matter und strukturierter Oberflächenbeschaffenheit erhalten werden. Die Rauhigkeit der Formkörper ist erhöht und gleichzeitig streuen sie sehr gut das Licht mit geringem Energieverlust.

**Tabelle 2**

| | **B1** | **B2** | **B3** | **B4** | **B5** | **B6** | **VB1** | **VB2** | **VB3** | **VB4** |
|---|---|---|---|---|---|---|---|---|---|---|
| Lichttransmission (D65/10) [%] | 87,8 | 82,7 | 72 | 57,3 | 84,3 | 57 | 87,4 | 81,8 | 87,8 | 80 |
| I-Halbwertswinkel | 13,7 | 21 | 11,4 | 41,5 | 20,7 | 45,2 | 12,3 | 20,7 | 13,9 | 24,2 |
| Streuvermögen | | | | | | | | | | |
| Mittenrauhwert Ra (2,5mm)[µm] | 2,74 | 4,83 | 3,33 | 4,81 | 4,41 | 4,24 | 2,64 | 4,52 | 2,35 | 3,59 |
| Gemittelte Rauhtiefe Rz (2,5mm) {[µm] | 22,4 | 37,66 | 27,59 | 33,7 | 31,95 | 29,79 | 21,32 | 30,31 | 18,11 | 25,85 |
| Rauhtiefe Rt (2,5mm) [µm] | 28,86 | 50,01 | 36,14 | 43,71 | 40,15 | 37,4 | 27,64 | 37,4 | 23,25 | 32,27 |
| Charpy-Schlagzähigkeit [MPa] | | 34,3 | | 32,6 | | | | 58,3 | | |
| Zugfestigkeit (spröd 5 mm/min, zäh(*) 50 mm/min) [MPa] | | 45,8* | | 47* | 59,7 | 63,7 | | 46,5* | | 59,6 |
| E-Modul (spröd 5 mm/min, zäh(*) 50mm/min) [MPa] | | 1983* | | 1905* | 3330 | 3297 | | 1904* | | 3311 |
| Streckdehnung (zäh 50mm/min) [%] | | 3,8 | | 4,3 | - | - | | 4,2 | | - |
| Bruchdehnung (spröd 5 mm/min, zäh (*) 50mm/min) [%] | | 15,1* | | 17* | 2,4 | 2,8 | | 37,3* | | 2,3 |
| Vicat (16H/80°C) [°C] | 97,4 | 96,9 | 98 | 98,9 | 103,2 | 104,9 | 98,3 | 98,5 | 103,9 | 103,9 |
| MVR (230°C;3,8kg) [cm^3/10min] | 1,4 | 1,1 | 1,4 | 1,3 | 4,6 | 4,9 | 1,4 | 1,3 | 5,6 | 5,2 |

## Patentansprüche

1. Zusammensetzung zur Herstellung von Formkörpern mit matter und strukturierter Oberflächenbeschaffenheit, umfassend eine Polymermatrix und vernetzte Polymerpartikel, **dadurch gekennzeichnet, dass** die Zusammensetzung
(i) erste vernetzte Polymerpartikel mit einem Volumenmittel der Teilchengröße im Bereich von 30 µm bis 1500 µm und
(ii) zweite vernetzte Polymerpartikel mit einem Volumenmittel der Teilchengröße kleiner 30 µm enthält,
wobei die Differenz des Brechungsindex der ersten Polymerpartikel minus dem Brechungsindex der Polymermatrix, jeweils gemessen bei 25°C, im Betrag kleiner 0,015 ist und wobei die Differenz des Brechungsindex der zweiten Polymerpartikel minus dem Brechungsindex der Polymermatrix, gemessen bei 25°C, im Betrag größer gleich 0,015 ist.

2. Zusammensetzung nach Anspruch 1, **dadurch gekennzeichnet, dass** die ersten vernetzten Polymerpartikel ein Volumenmittel der Teilchengröße im Bereich von 35 µm bis 500 µm aufweisen.

3. Zusammensetzung nach Anspruch 2, **dadurch gekennzeichnet, dass** die ersten vernetzten Polymerpartikel ein Volumenmittel der Teilchengröße im Bereich von 40 µm bis 150 µm aufweisen.

4. Zusammensetzung nach mindestens einem der vorangehenden Ansprüche, **dadurch gekennzeichnet, dass** die zweiten vernetzten Polymerpartikel ein Volumenmittel der Teilchengröße im Bereich von 1 µm bis kleiner 30 µm aufweisen.

5. Zusammensetzung nach Anspruch 4, **dadurch gekennzeichnet, dass** die zweiten vernetzten Polymerpartikel ein Volumenmittel der Teilchengröße im Bereich von 5 µm bis 25 µm aufweisen.

6. Zusammensetzung nach mindestens einem der vorangehenden Ansprüche, **dadurch gekennzeichnet, dass** die Differenz der Brechungsindizes von Polymermatrix und ersten Polymerpartikeln, gemessen bei 25°C, im Betrag kleiner 0,01 ist.

7. Zusammensetzung nach mindestens einem der vorangehenden Ansprüche, **dadurch gekennzeichnet, dass** das Matrixpolymer ein Homo- und Copolymer von C₁-C₁₈-Alkyl(meth)acrylaten umfasst, das ggf. noch davon verschiedene Monomereinheiten enthalten kann.

8. Zusammensetzung nach mindestens einem der vorangehenden Ansprüche, **dadurch gekennzeichnet, dass** die ersten Polymerpartikel ein Homo- oder Copolymer von C₁-C₁₈-Alkyl(meth)acrylaten umfasst, das ggf. noch davon verschiedene Monomereinheiten enthalten kann.

9. Zusammensetzung nach mindestens einem der vorangehenden Ansprüche, **dadurch gekennzeichnet, dass** die zweiten Polymerpartikel Wiederholungseinheiten umfasst, die mindestens einen aromatischen Rest aufweisen.

10. Zusammensetzung nach mindestens einem der vorangehenden Ansprüche, **dadurch gekennzeichnet, dass** die Polymerpartikel durch Vernetzung mit Allylmethacrylat, Divinylbenzol und/oder Ethylenglykoldimethacrylat erhältlich sind.

11. Zusammensetzung nach mindestens einem der vorangehenden Ansprüche, **dadurch gekennzeichnet, dass** sie, jeweils bezogen auf ihr Gesamtgewicht,
a. 20,0 Gew.-% bis 90 Gew.-% einer Polymermatrix,
b. 0,1 Gew.-% bis 20,0 Gew.-% erste Polymerpartikel und
c. 0,1 Gew.-% bis 20,0 Gew.-% zweite Polymerpartikel enthält.

12. Formkörper mit matter und strukturierter Oberflächenbeschaffenheit, erhältlich durch Umformen einer Zusammensetzung nach Anspruch 1.

13. Formkörper nach Anspruch 12, erhältlich durch Extrusion einer Zusammensetzung nach Anspruch 1.

14. Formkörper nach Anspruch 12 oder 13 mit einem Intensitätshalbwertswinkel bei 3 mm Dicke von mindestens 10° und einer gemittelten Rauhtiefe Rz von mindestens 10 µm.

15. Verwendung eines Formkörpers gemäß Anspruch 12, 13 oder 14 als Bauteil für Beleuchtungen, Zeichen und Symbole, Verkaufsstellen, Kosmetikverkaufsständer, Behältnisse, Heim- oder Bürodekorationen, Möbelanwendungen, Duschtüren und Bürotüren.

## Claims

1. Composition for the production of moldings having a matt and structured surface character, comprising a polymer matrix and crosslinked polymer particles, **characterized in that** the composition contains
(i)first crosslinked polymer particles having a volume average of the particle size in the range from 30 µm to 1500 µm and
(ii) second crosslinked polymer particles having a volume average of the particle size of less than 30 µm,
the difference between the refractive index of the first polymer particles and the refractive index of the polymer matrix, measured in each case at 25°C, being less than 0.015 as an absolute value and the difference between the refractive index of the second polymer particles and the refractive index of the polymer matrix, measured at 25°C, being greater than or equal to 0.015 as an absolute value.

2. Composition according to Claim 1, **characterized in that** the first crosslinked polymer particles have a volume average of the particle size in the range from 35 µm to 500 µm.

3. Composition according to Claim 2, **characterized in that** the first crosslinked polymer particles have a volume average of the particle size in the range from 40 µm to 150 µm.

4. Composition according to at least one of the preceding claims, **characterized in that** the second crosslinked polymer particles have a volume average of the particle size in the range from 1 µm to less than 30 µm.

5. Composition according to Claim 4, **characterized in that** the second crosslinked polymer particles have a volume average of the particle size in the range from 5 µm to 25 µm.

6. Composition according to at least one of the preceding claims, **characterized in that** the difference between the refractive indices of the polymer matrix and first polymer particles, measured at 25°C, is less than 0.01 as an absolute value.

7. Composition according to at least one of the preceding claims, **characterized in that** the matrix polymer comprises a homo- and copolymer of C₁-C₁₈-alkyl (meth)acrylates, which homo- or copolymer may optionally also contain monomer units differing therefrom.

8. Composition according to at least one of the preceding claims, **characterized in that** the first polymer particles comprise a homo- or copolymer of C₁-C₁₈-alkyl (meth)acrylates, which homo- or copolymer may optionally also contain monomer units differing therefrom.

9. Composition according to at least one of the preceding claims, **characterized in that** the second polymer particles comprise repeating units which have at least one aromatic radical.

10. Composition according to at least one of the preceding claims, **characterized in that** the polymer particles are obtainable by crosslinking with allyl methacrylate, divinylbenzene and/or ethylene glycol dimethacrylate.

11. Composition according to at least one of the preceding claims, **characterized in that** they contain, based in each case on their total weight,
a. 20.0% by weight to 90% by weight of a polymer matrix,
b. 0.1% by weight to 20.0% by weight of first polymer particles and
c. 0.1% by weight to 20.0% by weight of second polymer particles.

12. Moldings having a matt and structured surface character, obtainable by forming a composition according to Claim 1.

13. Moldings according to Claim 12, obtainable by extrusion of a composition according to Claim 1.

14. Moldings according to Claim 12 or 13, having a half-intensity angle at 3 mm thickness of at least 10° and an averaged peak-to-valley height Rz of at least 10 µm.

15. Use of a molding according to Claim 12, 13 or 14 as a component for lighting, signs and symbols, points-of-sale, cosmetics display stands, containers, home or office decorations, furniture applications, shower cabinet doors and office doors.

## Revendications

1. Composition pour la fabrication de corps moulés à surface matte et structurée, comprenant une matrice polymère et des particules polymères réticulées, **caractérisée en ce que** la composition contient
(i) des premières particules polymères réticulées ayant une moyenne en volume de la taille de particule dans la plage allant de 30 µm à 1 500 µm et
(ii) des secondes particules polymères réticulées ayant une moyenne en volume de la taille de particule inférieure à 30 µm,
la différence de l'indice de réfraction des premières particules moins l'indice de réfraction de la matrice polymère, à chaque fois mesuré à 25 °C, étant inférieure à 0,015 et la différence de l'indice de réfraction des secondes particules polymères moins l'indice de réfraction de la matrice polymère, mesuré à 25 °C, étant supérieure ou égale à 0,015.

2. Composition selon la revendication 1, **caractérisée en ce que** les premières particules polymères réticulées présentent une moyenne en volume de la taille de particule dans la plage allant de 35 µm à 500 µm.

3. Composition selon la revendication 2, **caractérisée en ce que** les premières particules polymères réticulées présentent une moyenne en volume de la taille de particule dans la plage allant de 40 µm à 150 µm.

4. Composition selon au moins l'une quelconque des revendications précédentes, **caractérisée en ce que** les secondes particules polymères réticulées présentent une moyenne en volume de la taille de particule dans la plage allant de 1 µm à moins de 30 µm.

5. Composition selon la revendication 4, **caractérisée en ce que** les secondes particules polymères réticulées présentent une moyenne en volume de la taille de particule dans la plage allant de 5 µm à 25 µm.

6. Composition selon au moins l'une quelconque des revendications précédentes, **caractérisée en ce que** la différence entre l'indice de réfraction de la matrice polymère et des premières particules polymères, mesuré à 25 °C, est inférieure à 0,01.

7. Composition selon au moins l'une quelconque des revendications précédentes, **caractérisée en ce que** le polymère de la matrice comprend un homo- et copolymère de (méth)acrylates d'alkyle en C₁-C₁₈, qui peut éventuellement également contenir des unités monomères différentes.

8. Composition selon au moins l'une quelconque des revendications précédentes, **caractérisée en ce que** les premières particules polymères comprennent un homo- ou copolymère de (méth)acrylates d'alkyle en C₁-C₁₈, qui peut éventuellement également contenir des unités monomères différentes.

9. Composition selon au moins l'une quelconque des revendications précédentes, **caractérisée en ce que** les secondes particules polymères comprennent des unités de répétition qui comportent au moins un radical aromatique.

10. Composition selon au moins l'une quelconque des revendications précédentes, **caractérisée en ce que** les particules polymères peuvent être obtenues par réticulation avec du méthacrylate d'allyle, du divinylbenzène et/ou du diméthacrylate d'éthylène glycol.

11. Composition selon au moins l'une quelconque des revendications précédentes, **caractérisée en ce qu'**elle contient, à chaque fois par rapport à son poids total,
a. 20,0 % en poids à 90 % en poids d'une matrice polymère,
b. 0,1 % en poids à 2 0 , 0 % en poids de premières particules polymères et
c. 0,1 % en poids à 20,0 0 % en poids de secondes particules polymères.

12. Corps moulé à surface matte et structurée, pouvant être obtenu par mise en forme d'une composition selon la revendication 1.

13. Corps moulé selon la revendication 12, pouvant être obtenu par extrusion d'une composition selon la revendication 1.

14. Corps moulé selon la revendication 12 ou 13, ayant un angle de demi-intensité à une épaisseur de 3 mm d'au moins 10° et une profondeur de rugosité moyenne Rz d'au moins 10 µm.

15. Utilisation d'un corps moulé selon la revendication 12, 13 ou 14 en tant que composant d'éclairages, de signaux et de symboles, de points de vente, de présentoirs pour cosmétiques, de contenants, de décorations de maisons ou de bureaux, d'applications pour meubles, de portes de douches et de portes de bureaux.
